# EUROPEAN PATENT SPECIFICATION

(11) **EP 2 779 585 B1**
(45) Date of publication and mention of the grant of the patent: **09.01.2019**
(21) Application number: 14159808.6
(22) Date of filing: 14.03.2014
(51) Int. Cl.: H04L 29/08, H04W 4/18

(54) **An apparatus, system and method of content transferring**
Vorrichtung, System und Verfahren zur Inhaltsübertragung
Appareil, système et procédé de transfert de contenus

(30) Priority: 15.03.2013 US 201361793419 P; 13.03.2014 US 201414209722
(43) Date of publication of application: 17.09.2014
(73) Proprietor: Synchronoss Technologies, Inc., Bridgewater, NJ 08807 (US)
(72) Inventor: Paul, Sumeet, Evanston, IL Illinois 60202 (US); Ridgard, Leighton, San Jose, CA California 95128 (US)
(74) Representative: Branderhorst, Matthijs Pieter Arie

(56) References cited:
- EP-A1- 2 175 627
- EP-A1- 2 530 907
- US-A1- 2013 003 708
- US-B1- 8 036 598

## Description

### RELATED APPLICATIONS

This application claims benefit of priority under 35 U.S.C. section 119(e) of the copending United States Provisional Patent Application Serial No. 61/793,419 filed March 15, 2013, entitled "Mobile Applications".

### FIELD OF THE INVENTION

The present invention relates to an apparatus, system and method of content transferring.

### BACKGROUND OF THE INVENTION

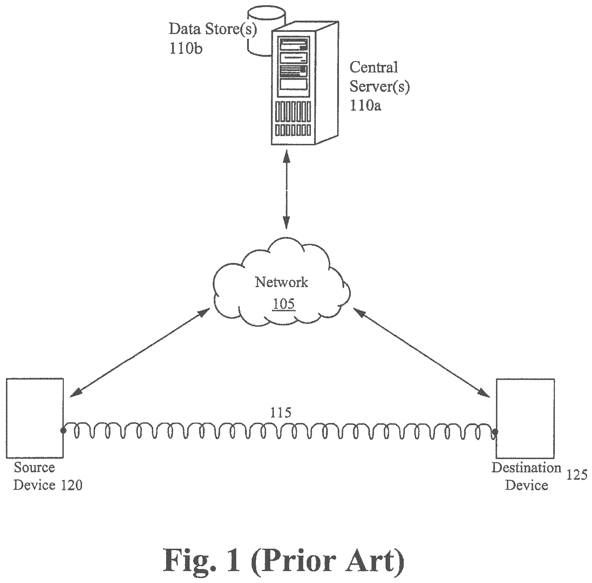

Figure 1 illustrates data transfer solutions in the prior art. As shown in Figure 1 , a system 100 includes two end devices. In particular, the two end devices includes a source mobile device 120 and a destination mobile device 125, and data is to be transferred between the source mobile device 120 and the destination mobile device 125. The system 100 can include a wire 115 coupling the source mobile device 120 and the destination mobile device 125. The system 100 can also include a network 105, at least one central server 110a and at least one data store 110b either internally or externally coupled thereto (collectively referred to simply as central server 110).

A prior art data transfer solution uses a wired channel, such as a USB cable 115, to directly transfer data from the source mobile device 120 to the destination mobile device 125. This prior art solution requires that a user has access to the cable 115. However, it is not usual and is inconvenient to carry such an accessory around.

Another prior art data transfer solution uses a wireless transfer, through the network 105, to indirectly transfer data from the source mobile device 120 to the destination mobile device 125. Data is first transferred wirelessly to the central server 110 from the source mobile device 120, and is then retrieved wirelessly from the central server 110 to the destination mobile device 125. The upload transmission must go through the network 105, through the network's backhaul, to the central server 110, and the download transmission must also go through the same. This prior art solution is slow because transmission is always limited to the available bandwidth of the network and Internet transmission speed.

The present invention addresses at least these limitations in the prior art.

Document EP 2530907 discloses techniques for causing a file to be sent from a source device over a network to one or more destination devices.

Document EP 2175627 discloses a mobile device for recording data, comprising recording means adapted to record data and memory means adapted to store recorded data, detecting means adapted to detect a server adapted to receive said recorded data via a wireless communication system, and transmitting means adapted to automatically transmit recorded data to a detected server via said wireless communication system without any user interaction when said detecting means detects said server.

Document US 2013/003708 discloses a technique for transmitting an object to a mobile device.

Document US 8036598 discloses a method of data transfer using short range technology.

### SUMMARY OF THE INVENTION

The invention provides a non-transitory computer-readable medium and a system as set out in the accompanying claims.

### BRIEF DESCRIPTION OF THE DRAWINGS

Reference will now be made in detail to implementations of the present invention as illustrated in the accompanying drawings. The same reference indicators will be used throughout the drawings and the following detailed description to refer to the same or like parts.
Figure 1 illustrates data transfer solutions in the prior art.
Figure 2 illustrates an exemplary data transfer system in accordance with the present invention.
Figure 3 illustrates an exemplary deployed solution in accordance with the present invention.
Figure 4A illustrates a graphical representation of an exemplary mobile terminal in accordance with the present invention.
Figure 4B illustrates a graphical representation of an exemplary computing device in accordance with the present invention.
Figure 5 illustrates an exemplary method of transmitting data from an end device in accordance with the present invention.
Figure 6 illustrates an exemplary method of receiving data at an end device in accordance with the present invention.
Figure 7 illustrates an exemplary method of transmitting and receiving data at a local server in accordance with the present invention.

### DETAILED DESCRIPTION OF THE INVENTION

In the following description, numerous details are set forth for purposes of explanation. However, one of ordinary skill in the art will realize that the invention may be practiced without the use of these specific details. Thus, the present invention is not intended to be limited to the embodiments shown but is to be accorded the widest scope consistent with the principles and features described herein.

### Overview

Embodiments of the present invention are directed to an apparatus, system and method of content transferring. Self-contained local servers, typically with built in WiFi access point capabilities, are locally deployed. Each local server acts as a local cache to a remote system Internet cloud infrastructure, which can include one or more remote servers. Each end device participating in the content transfer operation interacts with a local server rather than directly with the cloud infrastructure when a local server is available. For example, data is uploaded from a source device via a high speed WiFi connection to a data store coupled with the local server and is then retrieved by a target device from the same data store, thereby bypassing the need to use a small or nonexistent bandwidth circuit between the local server and the cloud infrastructure. However, when a connection is available to the central server and the target device does not complete the transfer of data uploaded by the source device, the local server uploads the data to the central server for synchronization over an independent connection at a later time.

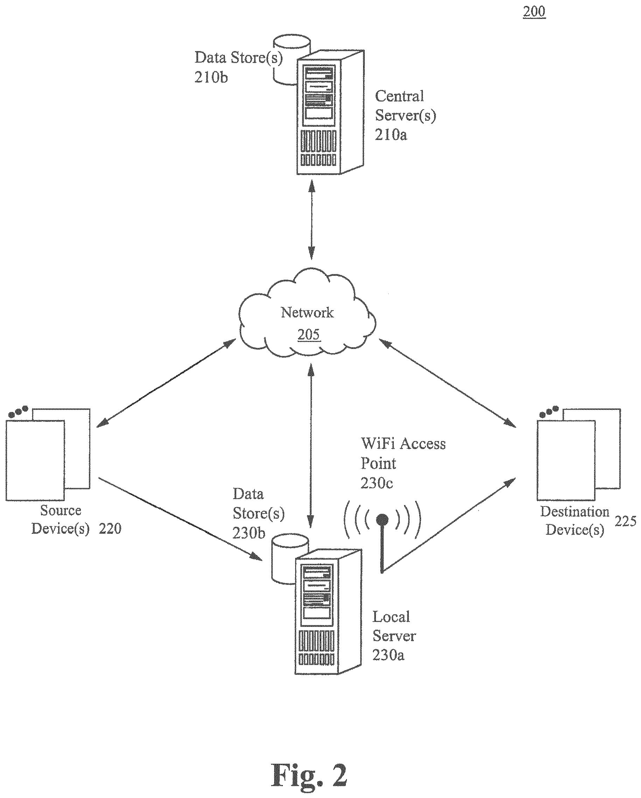

Figure 2 illustrates an exemplary data transfer system 200 in accordance with the present invention. As shown in Figure 2, the data transfer system 200 includes at least one central server 210a and at least one data store 210b either internally or externally coupled thereto. The central server 210a and the data store 210b are collectively referred to simply as central server 210. The central server 210 is typically a part of a remote system internet cloud infrastructure. It should be noted that the terms global server and central server are used interchangeably herein.

The data transfer system 200 also includes a local server 230a and at least one data store 230b either internally or externally coupled thereto. The local server 230a typically includes a built in WiFi access point 230c. The local server 230a, the data store 230b and the WiFi access point 230c are collectively referred to simply as local server 230. Both the local server 230 and the central server 210 are communicatively coupled with the network 205 via a broadband Internet connection, such as T1. Other suitable broadband Internet connections are possible. The local server 230 is able to send and receive data to and from the central server 210.

The data transfer system 200 also includes a plurality of end devices, including a source device 220 and a destination device 225. The end devices 220, 225 can be communicatively coupled with the central server 210 via broadband Internet connection, such as DSL or cable or a mobile broadband network, and are able to send and receive data to and from the central server 210. The end devices 220, 225 can be communicatively coupled with the local server 230 via WiFi, and are able to send and receive data to and from the local server 230. The source device 220 is therefore able to indirectly transfer content to the destination device 225 via the central server 210, the local server 230 or both.

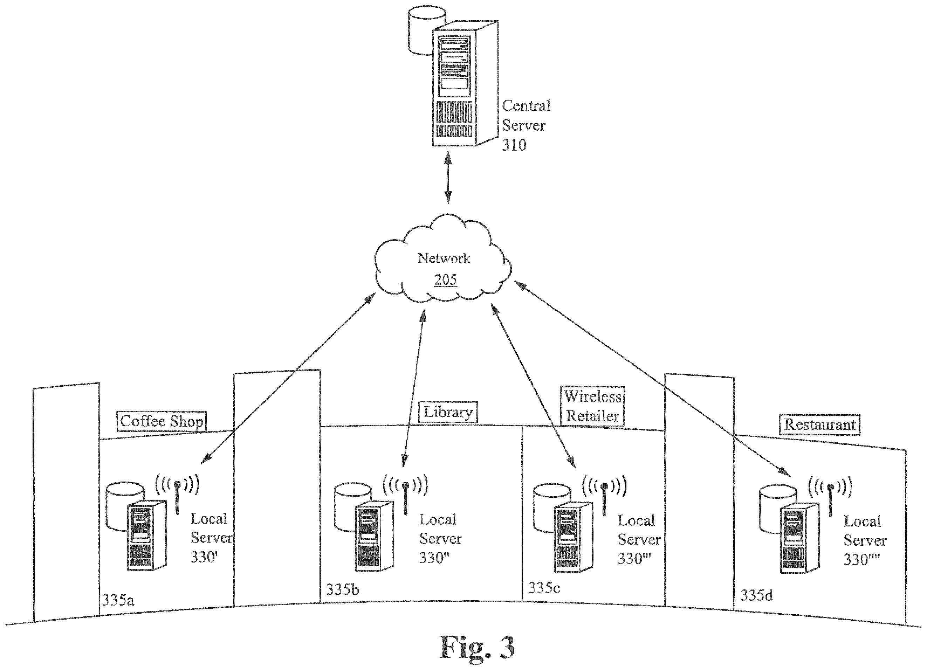

One or more local servers, such as the local server 230 of Figure 2, are locally deployed for facilitating content transfer and are configured as a local cache to the remote system Internet cloud infrastructure. Figure 3 illustrates an exemplary deployed solution in accordance with the present invention. As illustrated in Figure 3, local servers 330'-330"" is deployed in a neighborhood coffee shop 335a, library 335b, wireless retailer 335c, and restaurant 335d, respectively. Each local server 330'-330"" is similarly configured as the local server 230, and the central server 310 is similarly configured as the central server 210. Each local server 330'-330"" is communicatively coupled with the central server 310 via a network 305. Each end device participating in the content transfer operation interacts directly with a local server rather than directly with the cloud infrastructure when a local server is available. Briefly, any data uploaded from a first end device via a high speed WiFi connection to a communicatively coupled local server can be retrieved by a second end device from the same local server. And, any portion of the data uploaded to the local server that have not yet been downloaded to the second end device is thereafter uploaded to the central server 310 so that that portion of the data can later be retrieved therefrom by the second end device for download when the local server is no longer available to the second end device.

An end device can be a mobile device such as a smart phone, or can be a computing device such as a tablet. However, an end device can be any consumer device, such as a camera, a set-top box, or a game console, to name a few, as long as it has processing power and network connectivity. Typically, all end devices sharing the same user account can participate in a content transfer operation. In some embodiments, each end device is identified with the user account by a unique identifier, such as a device number, a mobile identification number or the like. User accounts can be created with an account server, which is a part of the remote system Internet cloud infrastructure. The account server can be the same as or different from the central server. Preferences can be set for each account and can include user preferences, administrator preferences, and/or system preferences. Preferences can indicate how long to persist data in the central server, and what data is to be transferred from a local server to the central server. Other preferences are contemplated.

Assume Aaron has three network enabled devices - a camera, a smart phone, and a laptop computer - associated with his user account and have a client-side transferring application installed thereon for participating in content transfer. The camera and the smart phone are on Aaron, but the laptop is at home. After a morning photo shoot, Aaron stops by the coffee shop 335a. While Aaron is at the coffee shop 335a, the local server 330' is automatically detected by the camera and a content transfer operation thereafter automatically begins. Photos begin to transfer from the camera to the smart phone via the local server 330'. After finishing a cup of coffee, Aaron leaves the coffee shop 335a even though content transfer operation has not finished (e.g., all the photos on the camera have not been backed up). Any photos uploaded to the local server 330' that have not yet been downloaded to the smart phone are uploaded to the central server 310 through the coffee shop's broadband Internet connection to the central server 310. Alternatively, all the photos uploaded to the local server 330' are uploaded to the central server 310 by the local server 330'. On his way home, Aaron stops by the library 335b to borrow some books. While Aaron is at the library 335b, the local server 330" is automatically detected by the camera and the content transfer operation thereafter automatically resumes. Remaining photos on the camera begin to transfer from the camera to the smart phone via the local server 330". After borrowing books, Aaron leaves the library 335b even if the content transfer operation has not finished (e.g., rest of the photos on the camera have not been backed up). Similarly, any photos uploaded to the local server 330" that have not yet been downloaded to the smart phone are uploaded to the central server 310 though library's broadband Internet connection to the central server 310. Alternatively, all the photos uploaded to the local server 330" are uploaded to the central server 310 by the local server 330". When Aaron finally returns home, (1) photos on the central server 310 uploaded by the local servers 330', 330" begin to transfer to the smart phone via the central server 310, and (2) any remaining photos on the camera begin to transfer from the camera to the smart phone via the central server 310, such that all the photos from the photo shoot are on his smart phone. Furthermore, if Aaron had previously set his preferences such that all content from an end device uploaded to any local server are also uploaded to the central server 310, then the central server 310 would have all the photos from the morning photo shoot. Any or all of the photos uploaded to the central server 310 can be transferred to the laptop computer from the central server 310.

Content persistence in the central server 310 can be time based or event based. For example, content in the central server is persisted just long enough for the content to be transferred to an end device. For another example, content in the central server is persisted until the content is transferred to an end device. For yet another example, content in the central server is persisted according to a membership plan, or based on an expiration of warranty period of an end device.

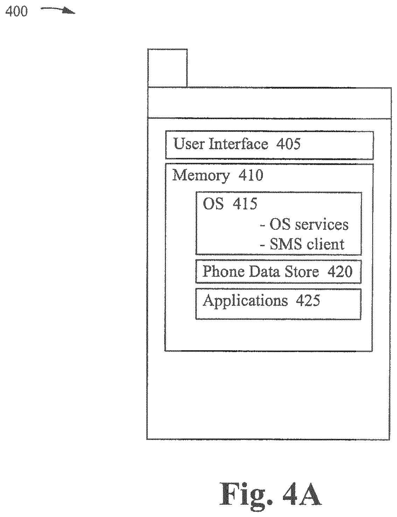

Figure 4A illustrates a graphical representation of an exemplary mobile device 400 in accordance with the present invention. The mobile device 400 is capable of being communicatively coupled to one or more networks to transmit voice and data communications to other devices communicatively coupled to the one or more networks. In general, a hardware structure suitable for implementing the mobile device 400 includes system memory 410 which may further include an operating system (OS) 415 having operating system services including telephony and linking services, networking services, multimedia and graphics display services all provided to a user interface (UI) 405. The OS 415 may be the mobile terminal's proprietary OS, BREW, or any other device or operating system suitable for a phone. The OS 415 also provides an SMS client built into the OS 415 allowing short messages to be provided across the one or more networks to and from other users. The mobile device 400 includes a native phone data store 420 which contains an address book of contacts and other information which may be provided by a user. Such information can further include ringtones, pictures, sounds, and movies, all dependent on the functional capabilities of the mobile device 400, the space allowed in the system memory 410, and the services provided by the OS 415. Applications 425, including a client-side content transferring application, various embodiments of which as described herein, are also loaded into the mobile device 400.

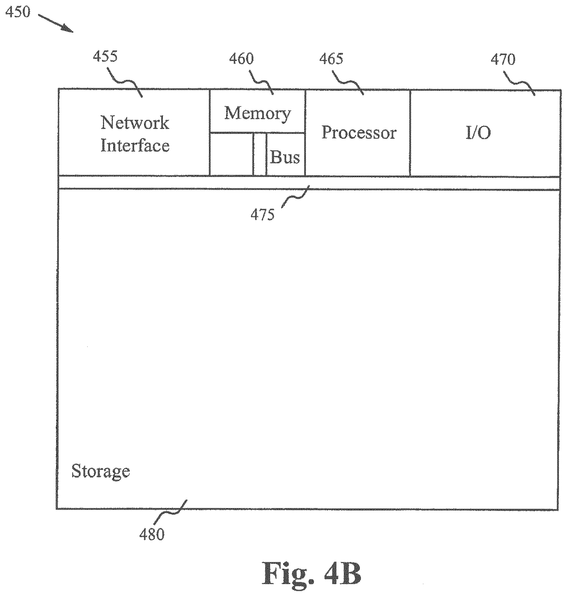

Figure 4B illustrates a graphical representation of an exemplary computing device 450 in accordance with the present invention. The computing device 450 is capable of being communicatively coupled to one or more networks to transmit data communications to other devices communicatively coupled to the one or more networks. In general, a hardware structure suitable for implementing the computing device 450 includes network interface(s) 455, a memory 460, processor 465, I/O device(s) 470, a bus 475 and a storage device 480. The choice of processor is not critical as long as the processor 465 has sufficient speed. The memory 460 is any conventional computer memory known in the art. The storage device 480 is a hard drive, CDROM, CDRW, DVD, DVDRW, flash memory card or any other storage device. The computing device is able to include one or more network interfaces 455. An example of a network interface includes a network card connected to an Ethernet or other type of LAN. The I/O device(s) 470 are able to include one or more of the following: keyboard, mouse, monitor, display, printer, modem and other devices. Applications, such as a client-side content transferring application, various embodiments of which are described herein, are likely to be stored in the storage device 480 and memory 460 and are executed by the processor 465.

As will be well understood by one of average skill in the art, embodiments of the client-side content transferring application can be downloaded by a user. To download and install the client-side content transferring application, the user typically selects the client-side content transferring application from offerings provided by a source, such as a service provider, a carrier, an enterprise service, or a third-party application provider, and installs the client-side content transferring application on an end device, such as the mobile device 400 or the computing device 450. In some embodiments, the client-side content transferring application allows the user to sign up for the transfer service, set up preferences (e.g., types of content to backup and/or restore; content persistence), and add/remove end devices.

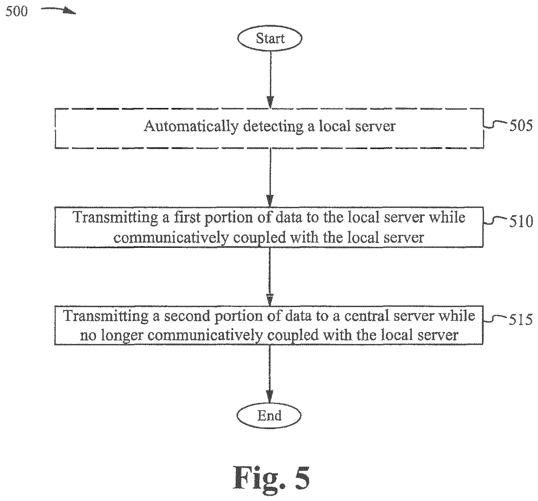

Figure 5 illustrates an exemplary method 500 of transmitting data from an end device in accordance with the present invention. The end device is typically a source device associated with a user account and has data that needs to be backed up. The data can include new or modified data since the last backup. The backup method 500 includes using an available local server and a central server when no local servers are longer available.

The backup method 500 begins at an optional step 505. At the optional step 505, the end device automatically detects the local server and communicatively couples therewith for transmitting data.

Data transfer from the end device can be automatically triggered or manually triggered after the end device is communicatively coupled with the local server. Typically, data transfer from the end device to the local server is by using WiFi capabilities of the local server. The end device can be communicatively decoupled with the local server at any point in time even in the middle of data transfer (e.g., all of the data on the end device have not yet been transferred to the local server). Data transferred while the end device is communicatively coupled with the local server is referred to as a first portion of data.

At a step 510, the first portion of data is transmitted from the end device to the local server. After the step 510, the end device is no longer communicatively coupled with the local server.

Assume no other local servers are available. The backup method 500 continues using the central server. Data transferred while the end device is communicatively coupled with the central server is referred to as a second portion of data. The second portion of data can be the rest of data that needs to be backed up. Typically, the transfer of the second portion of data from the end device to the local server is via a broadband Internet connection, such as through a home network.

At a step 515, the second portion of data is transmitted from the end device to the central server. After the step 515, the method 500 ends.

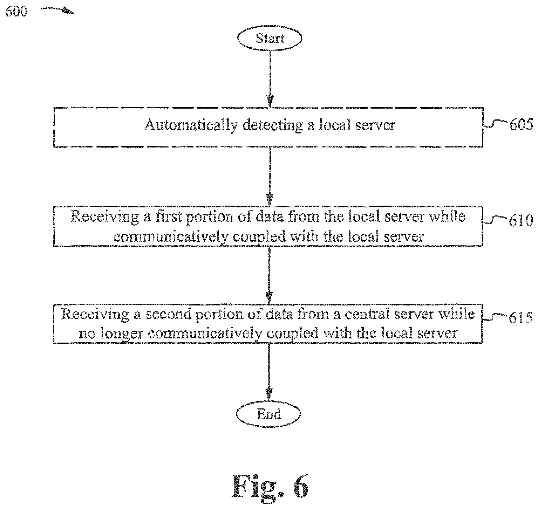

Figure 6 illustrates an exemplary method 600 of receiving data at an end device in accordance with the present invention. The end device is typically a destination or target device associated with a user account, and previously backed up data by a source device needs to be restored on the destination device. The restoration method 600 includes using an available local server and a central server when no local servers are longer available. Typically, the available local server is the same local server that the source device had recently transferred or is currently transferring content to.

The restoration method 600 begins at an optional step 605. At the optional step 605, the end device automatically detects the local server and communicatively couples therewith for receiving data.

Data transfer from the local server can be automatically triggered or manually triggered after the end device is communicatively coupled with the local server. Typically, data transfer from the local server to the end device is by using WiFi capabilities of the local server. The end device can be communicatively decoupled with the local server at any point in time even in the middle of data transfer (e.g., all of the data on the local server have not yet been transferred to the end device). Data transferred while the end device is communicatively coupled with the local server is referred to as a first portion of data.

At a step 610, the first portion of data is received from the local server to the end device. After the step 610, the end device is no longer communicatively coupled with the local server.

Data on the local server that have not yet been transferred to the end device is typically transferred to the central server and is referred to as a second portion of data. The restoration method 600 continues using the central server. Typically, the transfer of the second portion of data from the central server to the end device is via a broadband Internet connection, such as through a home network or a mobile broadband network, such as 4G, LTE, etc.

At a step 615, the second portion of data is received from the central server to the end device. After the step 615, the method 600 ends.

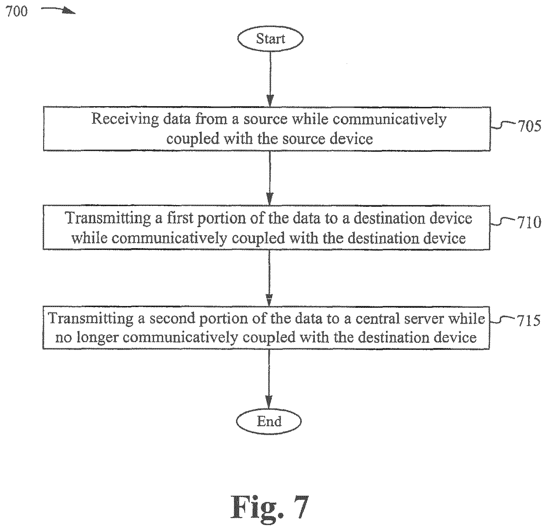

Assume that a source device and a destination device are communicatively coupled with a local server. The source device is configured to perform the backup method 500, while the destination device is configured to perform the restoration method 600. Figure 7 illustrates an exemplary method 700 of transmitting and receiving data at the local server in accordance with the present invention. As discussed elsewhere, the local server is configured as a proxy server with caching capabilities to the central server. As illustrated in Figure 2, communication between the local server and the central server is typically via a broadband Internet connection, whereas communication between the local server and an end device (e.g., source device or destination device) is typically via a WiFi connection provided by the local server.

The method 700 begins at a step 705. At the step 705, data is received from the source device while the source device is communicatively coupled with the local server.

Data on the local server that is transferred while the destination device is communicatively coupled with the local server is referred to as a first portion of data. In some embodiments, the first portion of data is transmitted to the destination device as soon as the first portion of the data is received from the source device. Alternatively, the first portion of data is transmitted to the destination device after all fo the data from the source device is received (e.g., the source device is no longer transmitted data to the local server).

At a step 710, the first portion of data is transmitted from the local server to the destination device. In some embodiments, the first portion of data can also be transmitted from the local server to the central server. After the step 710, the destination device is no longer communicatively coupled with the local server.

In some embodiments, prior to the steps 705 and 710, account information associated with the source device and the destination device is received and an account is accessed using the account information. Data is backed up and restored to and from the appropriate user account.

Data on the local server that have not yet been transferred to the destination device is referred to as a second portion of data. At a step 715, the second portion of data is transmitted from the local server to the central server. After the step 715, the method 700 ends.

Although the method 700 has been discussed as restoring data on a single destination device communicatively coupled with the local server, it is contemplated that if other destination devices associated with the same user account are communicatively coupled with the local server while the backed up data is still on the local server, then the backed up data from the local server can be restored to any or all of the other communicatively coupled destination devices.
Furthermore, it is contemplated that any backed up data on the central server can be restored to any or all destination devices associated with the same user account, including destination devices that are not easily portable to communicatively couple with the local server for local data transfer.

### Local Server Specifics

Utilizing a local server reduces time and mobile network bandwidth during content transfer, eliminates a direct cable connection between two end devices, and advantageously provides a cloud-based solution in a local area for real-time data transfer. The local server is able to bypasses a majority of data transfer across distance between two end devices and to keep the majority of the data transfer local, using a high speed connection between the two end devices. The high speed connection is provided by WiFi capabilities of the local server, creating a local hotspot. The local server receives and transmits data between the two end devices and communicates with the remote central server on behalf of the end devices. To the end devices, it appears as if the data transfer is with the remote central server. The speed of data transfer via the local server is typically limited to the speed of the WiFi capabilities of the local server, which is typically faster than any mobile broadband connection or any broadband Internet connection.

The solution allows a user to start uploading data at a local hotspot and, perhaps, continue uploading data at home. The solution also allows a user to start downloading data at a local hotspot and, perhaps, continue downloading data at home. Because data transfer is at least partly completed locally, it is a lot easier and faster for a user to transfer content since the local server advantageously handles the slow roll of data to the central server. As discussed elsewhere, the local server is configured to cache content and upload content to the central server. The local server and the central server are able to reconcile differences in data (e.g., data conflicts) such that the central server has all of the data.

Several optimizations can be implemented to expand seamless user experience and minimize data transfer. For example, an exemplary optimization is utilizing content matching algorithms to avoid uploading files from a source device when the system, particularly a local server or the central server, already has copies of. Content can include media files such as music, videos, pictures, applications, documents, or any other non-operating system data files. In some embodiments, user created content can be separated from common content through a combination of data location and data formats on an end device. As such, the system is able to introduce applications into a shared cache space while placing user settings and data from an application into a user only cache space. Those copied files can reside either in the cache spaces in a local server and/or in the central server. A match against a local server generates a command for a destination device to download the file locally (while the destination device is communicatively coupled with the local server). A cached file in the central server creates a command for the destination device to download the cached content from the central server. Alternatively, the cached file in the central server can be transferred to a local server to be locally transferred to the destination device.

As discussed, a local server is able to retrieve content on behalf a destination device from the central server. For example, instead of retrieving all data, the local server is able to communicate with the central server to retrieve content just in time for the destination device to download the data, allowing minimal impact to the cloud network connection when sufficient other local cached content is present. This can be done by calculating the total amount of local cached data is available and determining through communication with the destination device the amount of actual bandwidth is available between the local server and the destination device. Additional data can be pulled from the central server to augment data uploaded from a source device. However, when the source device and the destination device leave coverage of the local server, both can optionally switch to direct transfer to and from the central server using, for example, such as a mobile broadband connection, or restrict data transfer until the user reaches a place with, for example, a WiFi network.

A local server can also accumulate knowledge about local customer populations regarding content which is popular and common with the user base at that location, based on the actual traffic of data that is being pushed and pulled from the local server. This information can be used by the cloud infrastructure to prepopulate newly deployed local servers with the content which is likely to be common in transfer operations. For example, pre-cached content in a local server deployed in Times Square, New York could include the top 100 songs from the last 12 months of Billboard Top 100 pop songs list, while pre-cached content in a local server deployed in Wichita, Kansas could include be prepopulated with the top 20 songs from the Billboard Top 100 pop songs list and with the top 100 songs from the Billboard Top 100 country songs list.

By monitoring local cache content that is being passed from a source device to a destination device, new content trends can be discovered and could be replicated to other local servers in other similar locations prior to the first customer passing their data through the transfer process in those other locations, thereby reducing upload time from a source device to the local server. For example, a local server could learn that the people in that area like a specific song. The local server could store that song perhaps, it learns that that song is no longer popular. If Vi starts a transfer process from her old smart phone that has that song, that song will not be transferred. Instead, an identifier for that song is transferred. Vi's new smart phone is then instructed to download the cached song from the local server.

A local server could limit data connectivity between end devices connected to it and an external network. End devices communicatively coupled would only be able to communicate with the local server and not be able to browse or transmit data directly to the Internet, including but not limited to sending and receiving email. Combined with WiFi network security that can be included in the client-side content transferring application, third party users attempting to hijack a local server to piggyback on that local server's Internet connection would result in a dead end data connection. The local server could also require AID authentication to maintain a WiFi connection to the local server when the local server has a backhaul connection to provide additional security. Providing an end device with an isolated network limits the data traffic initiated by other applications on the end device while the transfer is taking place because these applications will be unable to reach their destinations, and due to standard device configurations, WiFi networks typically take precedence over cellular networks on the end device. An isolated network makes a transfer process easier since no data on end device is being changed. Furthermore, the transfer process is able to use the full bandwidth of the WiFi connection to the local server.

A local server can be partitioned during installation to set preferences for specific content types to be handled locally instead of requiring a user to upload to the central server. These partitions are dynamically sizable based on traffic and volume of data arriving at the local server. For example, when only one user is using the local server, no partition of content type data would be performed. However, when 10 users are using the local server, the local server would automatically partition to utilize local space for contacts, music and other highly prioritized content types, while directing the end devices to utilize the cloud directly for lower priority content types.

### Other Exemplary Use Cases

Either a local or central server is configured by an administrator (e.g., corporation, carrier, etc.) with definitions or instructions that, for example, all destination devices (or a subset of the destination devices) must include (or not include) a specific content. Every time the server is in communication with a destination device, the server verifies whether or not that destination device includes any of the specified content (or includes prohibited content) and then sends any missing content to the destination (or deletes the prohibited content).

Resetting Handsets. Demo models, such as handsets, displayed on the store floor are played with by customers throughout an entire day. People take pictures, play games, browse the web, create files, etc., on these demo models. At the end of the day, the display models are reset. For example, definitions in a local server can include "all devices must contain these pictures but no other pictures." It is contemplated that the solution of the present invention can be used to push a set of required pictures from the local server to all the store handsets and to remove all other pictures after the store closes each day.

Enterprise Synchronization. A new training video is available. An administrator pushes the video on a local server to be automatically pushed to all corporate phones or to corporate phones belonging to executives. Similarly, a contact for a new salesperson, a memo from the President, or the like can be pushed to end devices in a faster, a more convenient, and a more reliable manner. In some embodiments, each destination device, namely a corporate phone, is prompted to connect to the server for receiving new content from the server. Alternatively or in addition to, the corporate phone is able to periodically poll the server for new content and to pull the new content from the server. Synchronization not only includes adding content but also removing content, such as "non-official" or personal data from the corporate phones. Further, synchronization can also prevent certain data from being backed up.

## Claims

1. A non-transitory computer-readable medium storing instructions that, when executed by a computing device configured as a local server, cause the computing device to perform a transfer method comprising:
a. receiving (705) data from a source end device associated with a user account while communicatively coupled with the source end device via WiFi capabilities of the local server;
b. transmitting (710) a first portion of the data to a destination end device also associated with the user account while communicatively coupled with the destination end device via WiFi capabilities of the local server; and
c. transmitting (715) a second portion of the data but not the first portion of the data to a central server while no longer communicatively coupled with the destination end device.

2. The non-transitory computer-readable medium of Claim 1, wherein the first portion of the data is transferred to the destination end device as soon as the first portion of the data is received from the source end device.

3. The non-transitory computer-readable medium of Claim 1, wherein the first portion of the data is transferred to the destination end device after all of the data from the source end device is received.

4. The non-transitory computer-readable medium of Claim 1, wherein the transfer method further comprises, prior to receiving data from a source end device, receiving account information associated with the source end device and the destination end device, and accessing an account using the account information.

5. The non-transitory computer-readable medium of Claim 1, wherein the transfer method further comprises transmitting at least a portion of the data to another destination end device.

6. A system comprising:
a. a local server (230a, 330-330"') configured as a proxy server to cache data from at least one source end device and to transmit a first portion of the data to a first destination end device while communicatively coupled with the destination end device via WiFi capabilities of the local server and a second portion of the data but not the first portion of the data to a central server while no longer communicatively coupled with the destination end device; and
b. a plurality of end devices associated with a user account, wherein the plurality of end devices includes the source end device and the destination end device, wherein the source end device is configured to transmit the data to the local server (230a, 330-330"') while the source end device is in communication with the local server (230a, 330-330"') via WiFi capabilities of the local server (230a, 330-330"').

7. The system of Claim 6, wherein the local server is configured to limit data connectivity between an end device communicatively coupled thereto and an external network.

8. The system of Claim 6, wherein the source end device is configured to transmit data to the central server via a broadband Internet connection while the source end device is not in communication with the local server, wherein the destination end device is configured to receive from the central server, while the destination end device is not in communication with the local server, the data transmitted to the central server from the source end device.

9. The system of Claim 6, wherein the local server is configured to accumulate knowledge about local customer population by learning from data stored thereon, wherein the central server is configured to prepopulate a newly deployed local server based on the accumulated knowledge.

10. The system of Claim 6, wherein the local server is configured with definitions by an administrator, wherein the definitions include end device reset instructions.

11. The system of Claim 10, wherein the end device reset instructions include instructions to remove prohibited content from each of the plurality of end devices and to make sure required content resides on each of the plurality of end devices.

12. The system of Claim 10, wherein the local server is also configured with new content, wherein the definitions include instructions regarding making the new content available to at least one of the plurality of end devices.

## Patentansprüche

1. Nichtflüchtiges computerlesbares Medium, das Anweisungen speichert, die, wenn sie durch eine als lokaler Server konfigurierte Computervorrichtung ausgeführt werden, die Computervorrichtung veranlassen, ein Übertragungsverfahren durchzuführen, welches umfasst:
a. Empfangen (705) von Daten von einer Quell-Endvorrichtung, die einem Benutzerkonto zugeordnet ist, während sie über WiFi-Fähigkeiten des lokalen Servers kommunikativ mit der Quell-Endvorrichtung gekoppelt ist;
b. Übertragen (710) eines ersten Abschnitts der Daten zu einer ebenfalls dem Benutzerkonto zugeordneten Ziel-Endvorrichtung, während sie über WiFi-Fähigkeiten des lokalen Servers kommunikativ mit der Ziel-Endvorrichtung gekoppelt ist; und
c. Übertragen (715) eines zweiten Abschnitts der Daten, aber nicht des ersten Abschnitts der Daten zu einem zentralen Server, während sie nicht mehr kommunikativ mit der Ziel-Endvorrichtung gekoppelt ist.

2. Nichtflüchtiges computerlesbares Medium nach Anspruch 1, worin der erste Abschnitt der Daten zur Ziel-Endvorrichtung übertragen wird, sobald der erste Abschnitt der Daten von der Quell-Endvorrichtung empfangen ist.

3. Nichtflüchtiges computerlesbares Medium nach Anspruch 1, worin der erste Abschnitt der Daten zur Ziel-Endvorrichtung übertragen wird, nachdem alle Daten von der Quell-Endvorrichtung empfangen sind.

4. Nichtflüchtiges computerlesbares Medium nach Anspruch 1, worin das Übertragungsverfahren ferner umfasst: vor dem Empfangen von Daten von einer Quell-Endvorrichtung erfolgendes Empfangen von Kontoinformation, die der Quell-Endvorrichtung und der Ziel-Endvorrichtung zugeordnet ist, und Zugreifen auf ein Konto unter Verwendung der Kontoinformation.

5. Nichtflüchtiges computerlesbares Medium nach Anspruch 1, worin das Übertragungsverfahren ferner umfasst: Übertragen zumindest eines Abschnitts der Daten zu einer anderen Ziel-Endvorrichtung.

6. System, umfassend:
a. einen lokalen Server (230a, 330-330"'), der als Proxy-Server konfiguriert ist, um Daten von mindestens einer Quell-Endvorrichtung zwischenzuspeichern und einen ersten Abschnitt der Daten zu einer ersten Ziel-Endvorrichtung zu übertragen, während er über WiFi-Fähigkeiten des lokalen Servers kommunikativ mit der Ziel-Endvorrichtung gekoppelt ist, und einen zweiten Abschnitt der Daten, jedoch nicht den ersten Abschnitt der Daten zu einem zentralen Server zu übertragen, während er nicht mehr kommunikativ mit der Ziel-Endvorrichtung gekoppelt ist; und
b. eine Vielzahl von Endvorrichtungen, die einem Benutzerkonto zugeordnet sind, worin die Vielzahl von Endvorrichtungen die Quell-Endvorrichtung und die Ziel-Endvorrichtung einschließt, worin die Quell-Endvorrichtung dafür konfiguriert ist, die Daten zum lokalen Server (230a, 330-330"') zu übertragen, während die Quell-Endvorrichtung über WiFi-Fähigkeiten des lokalen Servers (230a, 330-330"') mit dem lokalen Server (230a, 330-330"') in Kommunikation steht.

7. System nach Anspruch 6, worin der lokale Server dafür konfiguriert ist, die Datenkonnektivität zwischen einer kommunikativ mit ihm gekoppelten Endvorrichtung und einem externen Netzwerk zu begrenzen.

8. System nach Anspruch 6, worin die Quell-Endvorrichtung dafür konfiguriert ist, Daten über eine Breitband-Internetverbindung zum zentralen Server zu übertragen, während die Quell-Endvorrichtung nicht mit dem lokalen Server in Kommunikation steht, worin die Ziel-Endvorrichtung dafür konfiguriert ist, während die Ziel-Endvorrichtung nicht mit dem lokalen Server in Kommunikation steht, vom zentralen Server die Daten zu empfangen, die von der Quell-Endvorrichtung zum zentralen Server übertragen wurden.

9. System nach Anspruch 6, worin der lokale Server dafür konfiguriert ist, Wissen über die lokale Kundenpopulation durch Lernen aus auf ihm gespeicherten Daten zu sammeln, worin der zentrale Server dafür konfiguriert ist, einen neu eingesetzten lokalen Server auf der Grundlage des gesammelten Wissens vorab zu besiedeln.

10. System nach Anspruch 6, worin der lokale Server durch einen Administrator mit Definitionen konfiguriert wird, worin die Definitionen Anweisungen zum Zurücksetzen von Endvorrichtungen einschließen.

11. System nach Anspruch 10, worin die Anweisungen zum Zurücksetzen von Endvorrichtungen Anweisungen einschließen, um verbotenen Inhalt von jeder aus der Vielzahl von Endvorrichtungen zu entfernen und sicherzustellen, dass erforderlicher Inhalt sich auf jeder aus der Vielzahl von Endvorrichtungen befindet.

12. System nach Anspruch 10, worin der lokale Server außerdem mit neuem Inhalt konfiguriert wird, worin die Definitionen Anweisungen dafür einschließen, wie der neue Inhalt für mindestens eine aus der Vielzahl von Endvorrichtungen verfügbar gemacht wird.

## Revendications

1. Support lisible par informatique non transitoire qui stocke des instructions qui, lorsqu'elles sont exécutées par un dispositif informatique qui est configuré en tant que serveur local, forcent le dispositif informatique à réaliser un procédé de transfert qui comprend :
a. la réception (705) de données qui proviennent d'un dispositif d'extrémité de source qui est associé à un compte d'utilisateur tandis qu'un couplage en termes de communication avec le dispositif d'extrémité de source est effectif via des capacités Wi-Fi du serveur local ;
b. l'émission (710) d'une première partie des données jusqu'à un dispositif d'extrémité de destination qui est également associé au compte d'utilisateur tandis qu'un couplage en termes de communication avec le dispositif d'extrémité de destination est effectif via des capacités Wi-Fi du serveur local ; et
c. l'émission (715) d'une seconde partie des données mais pas de la première partie des données jusqu'à un serveur central tandis qu'un couplage en termes de communication avec le dispositif d'extrémité de destination n'est plus effectif.

2. Support lisible par informatique non transitoire selon la revendication 1, dans lequel la première partie des données est transférée jusqu'au dispositif d'extrémité de destination aussitôt que la première partie des données est reçue depuis le dispositif d'extrémité de source.

3. Support lisible par informatique non transitoire selon la revendication 1, dans lequel la première partie des données est transférée jusqu'au dispositif d'extrémité de destination après que toutes les données qui proviennent du dispositif d'extrémité de source sont reçues.

4. Support lisible par informatique non transitoire selon la revendication 1, dans lequel le procédé de transfert comprend en outre, avant la réception de données qui proviennent d'un dispositif d'extrémité de source, la réception d'une information de compte qui est associée au dispositif d'extrémité de source et au dispositif d'extrémité de destination, et l'accès à un compte en utilisant l'information de compte.

5. Support lisible par informatique non transitoire selon la revendication 1, dans lequel le procédé de transfert comprend en outre l'émission d'au moins une partie des données jusqu'à un autre dispositif d'extrémité de destination.

6. Système comprenant :
a. un serveur local (230a, 330-330"') qui est configuré en tant que serveur proxy pour mettre en cache des données qui proviennent d'au moins un dispositif d'extrémité de source et pour émettre une première partie des données jusqu'à un premier dispositif d'extrémité de destination tandis qu'un couplage en termes de communication avec le dispositif d'extrémité de destination est effectif via des capacités Wi-Fi du serveur local et une seconde partie des données mais pas la première partie des données jusqu'à un serveur central tandis qu'un couplage en termes de communication avec le dispositif d'extrémité de destination n'est plus effectif ; et
b. une pluralité de dispositifs d'extrémité qui sont associés à un compte d'utilisateur, dans lequel la pluralité de dispositifs d'extrémité inclut le dispositif d'extrémité de source et le dispositif d'extrémité de destination, dans lequel le dispositif d'extrémité de source est configuré de manière à ce qu'il émette les données sur le serveur local (230a, 330-330'") tandis que le dispositif d'extrémité de source est en communication avec le serveur local (230a, 330-330'") via des capacités Wi-Fi du serveur local (230a, 330-330'").

7. Système selon la revendication 6, dans lequel le serveur local est configuré de manière à ce qu'il limite la connectivité en termes de données entre un dispositif d'extrémité qui lui est couplé en termes de communication et un réseau externe.

8. Système selon la revendication 6, dans lequel le dispositif d'extrémité de source est configuré de manière à ce qu'il émette des données sur le serveur central via une connexion Internet large bande tandis que le dispositif d'extrémité de source n'est pas en communication avec le serveur local, dans lequel le dispositif d'extrémité de destination est configuré de manière à ce qu'il reçoive, depuis le serveur central, tandis que le dispositif d'extrémité de destination n'est pas en communication avec le serveur local, les données qui sont émises sur le serveur central depuis le dispositif d'extrémité de source.

9. Système selon la revendication 6, dans lequel le serveur local est configuré de manière à ce qu'il accumule une connaissance concernant une population de clients locaux en réalisant un apprentissage à partir de données stockées dessus, dans lequel le serveur central est configuré de manière à ce qu'il prépeuple un serveur local déployé nouvellement sur la base de la connaissance accumulée.

10. Système selon la revendication 6, dans lequel le serveur local est configuré avec des définitions par un administrateur, dans lequel les définitions incluent des instructions de réinitialisation de dispositif d'extrémité.

11. Système selon la revendication 10, dans lequel les instructions de réinitialisation de dispositif d'extrémité incluent des instructions pour supprimer un contenu prohibé au niveau de chacun de la pluralité de dispositifs d'extrémité et pour assurer qu'un contenu requis réside sur chacun de la pluralité de dispositifs d'extrémité.

12. Système selon la revendication 10, dans lequel le serveur local est également configuré avec un nouveau contenu, dans lequel les définitions incluent des instructions en ce qui concerne le fait de rendre le nouveau contenu disponible pour au moins l'un de la pluralité de dispositifs d'extrémité.
